# FASCICULE DE BREVET EUROPEEN

(11) **EP 0 479 638 B1**
(45) Date de publication et mention de la délivrance du brevet: **31.08.1994**
(21) Numéro de dépôt: 91402508.5
(22) Date de dépôt: 20.09.1991
(51) Int. Cl.: B65G 47/252

(54) **Dispositif pour vider des caisses contenant notamment des fruits et des légumes**
Vorrichtung zum Entleeren von insbesondere Früchte und Gemüse enthaltenden Kästen
Device for emptying boxes containing, in particular, fruits and vegetables

(30) Priorité: 02.10.1990 FR 9012119
(43) Date de publication de la demande: 08.04.1992
(73) Titulaire: MATERIEL POUR L'ARBORICULTURE FRUITIERE (M.A.F.), F-82001 Montauban Cédex (FR)
(72) Inventeur: Blanc, Philippe, F-82000 Montauban (FR)
(74) Mandataire: Armengaud Ainé, Alain

(56) Documents cités:
- EP-A- 0 298 294
- FR-A- 2 429 730
- PATENT ABSTRACTS OF JAPAN, vol. 8, no. 96 (M-294)(1533) 4 Mai 1984 & JP-A-59 012 014 ( KEWPIE K.K. ) 21 Janvier 1984

## Description

La présente invention concerne un dispositif permettant de vider des caisses contenant des objets fragiles tels que notamment des fruits ou des légumes selon le procédé dit à "sec".

Il existe à l'heure actuelle sur le marché des machines permettant de vider à "sec" des caisses contenant notamment des fruits qui comportent un convoyeur d'amenée des caisses pleines, un convoyeur de maintien de ces caisses coopérant avec un tambour rotatif afin d'assurer un retournement des caisses selon environ 180° en vue de les vider, celles-ci étant entraînées entre le tambour et le convoyeur de maintien, une bande transporteuse étant prévue pour entraîner le tambour et pour servir en outre de surface de réception et d'évacuation au contenu des caisses après les avoir vidées. Ces machines connues comportent en outre des moyens pour assurer le maintien des caisses vides et des moyens pour évacuer ces caisses vides.

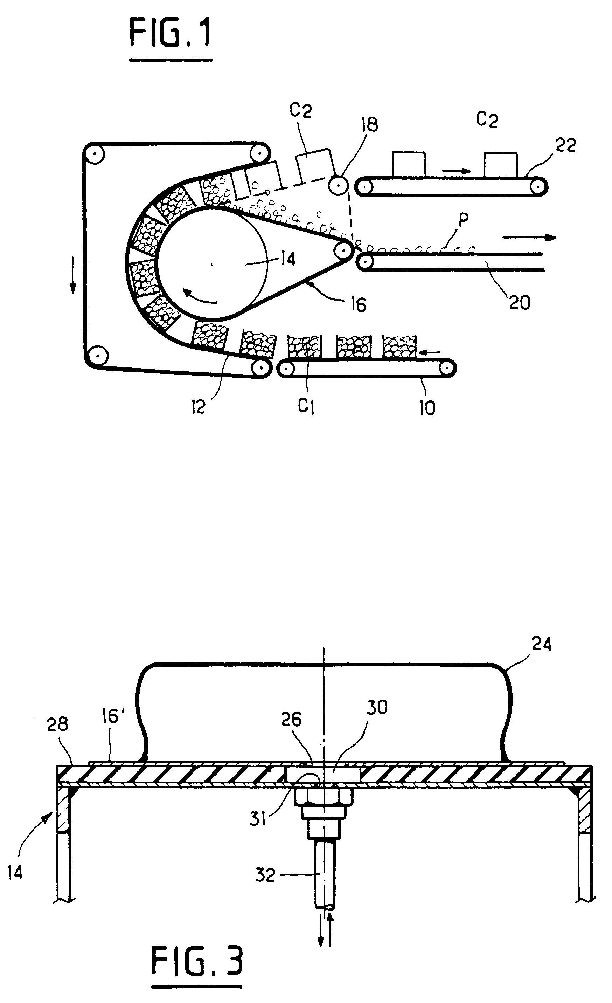

Sur la figure 1 des dessins annexés, on a représenté de façon schématique en une vue en élévation latérale un exemple de réalisation d'une telle machine de type connu.

Ainsi qu'on le voit sur cette figure 1, la machine comporte un convoyeur 10 assurant l'amenée des caisses pleines C1, un convoyeur 12 permettant de maintenir les caisses pleines durant l'opération de retournement par basculement autour d'un tambour 14, ce dernier étant entraîné en rotation par une bande transporteuse 16 qui comporte des ondulations. Comme on le voit sur cette figure, les caisses pleines C1 sont entraînées autour du tambour 14 contre lequel elles sont maintenues par le convoyeur de maintien 12, durant ce mouvement elles subissent une rotation de l'ordre de 180° assurant leur vidage à la partie supérieure du tambour 14, leur contenu tel que notamment des fruits P tombant alors sur la bande transporteuse ondulée 16 qui les délivre à un transporteur à bande 20. La machine comporte en outre des moyens désignés dans leur ensemble par la référence 18 pour maintenir les caisses vides C2 et des moyens, réalisés ici sous la forme d'un transporteur à bande 22 pour évacuer les caisses vides.

Ces machines connues ne donnent pas toute satisfaction notamment lorsque les caisses ne sont pas totalement pleines et contiennent des produits fragiles tels que notamment des fruits ou des légumes. En effet, dans ce cas, il est nécessaire de ne mettre dans les caisses qu'une ou deux couches seulement de fruits, disposés au fond de la caisse et on comprend que, lors du retournement de la caisse autour du tambour 14 les fruits tombent brutalement sur la bande transporteuse ondulée 16 en roulant les uns sur les autres, ce qui bien entendu est susceptible de les endommager et de les rendre impropres à la consommation.

La présente invention se propose d'apporter des perfectionnements aux machines du type décrit ci-dessus de manière à pouvoir vider des caisses partiellement remplies de produits fragiles, tels que notamment des fruits sans qu'il en résulte un quelconque dommage pour ces produits.

En conséquence, cette invention concerne un dispositif pour vider des caisses contenant notamment des produits fragiles tels que des fruits ou des légumes qui comporte un convoyeur d'amenée des caisses pleines, un convoyeur de maintien de ces caisses coopérant avec un tambour rotatif pour assurer un retournement sur environ 180° des caisses afin de les vider, ces caisses étant entraînées entre le tambour et ledit convoyeur de maintien, une bande transporteuse entraînant le tambour et servant en outre de surface de réception et d'évacuation pour le contenu des caisses vidées et des moyens pour assurer le maintien des caisses vides ainsi que des moyens pour assurer l'évacuation de ces caisses vides, ce dispositif étant caractérisé en ce que la bande transporteuse entraînant le tambour est munie d'une pluralité d'alvéoles souples et gonflables, de manière à pouvoir se dilater, de façon contrôlée, dans chaque caisse lors de son retournement entre ledit convoyeur de maintien et le tambour en occupant ainsi l'espace laissé libre entre la surface des produits contenus dans la caisse et celle du tambour, des moyens étant prévus pour assurer le gonflage séparé de chaque alvéole lorsqu'elle arrive en regard d'une caisse pleine.

Selon l'invention, la bande transporteuse munie d'alvéoles comporte un orifice pour chaque alvéole, cet orifice permettant d'assurer l'alimentation en air comprimé de ladite alvéole.

Selon une autre caractéristique de cette invention, le tambour est muni d'un revêtement en un matériau assurant l'étanchéité entre la surface du tambour et celle de la bande transporteuse portant les alvéoles gonflables, ce revêtement étant pourvu de découpes qui débouchent respectivement sur les orifices correspondants prévus dans les alvéoles afin d'assurer l'alimentation en air comprimé de ces dernières.

Selon un mode de réalisation préféré du dispositif objet de l'invention, on prévoit un distributeur rotatif au centre du tambour pour assurer l'alimentation en air comprimé des alvéoles par l'intermédiaire de conduites radiales disposées dans le tambour, la vitesse de rotation de ce distributeur étant identique à celle du tambour de manière à gonfler une alvéole lorsque la caisse pleine est totalement plaquée contre le tambour avant son retournement, à la maintenir gonflée durant toute la rotation du tambour assurant le retournement de la caisse et à dégonfler ladite alvéole lorsque la caisse arrive à la partie supérieure du tambour où se produit le vidage.

De préférence, le dégonflage de chaque alvéole n'est pas réalisé de façon totale de manière que ces alvéoles jouent le rôle d'un tapis de réception ondulé empêchant les produits déversés à partir de la caisse en cours de vidage, de tomber brutalement et de rouler sur la bande transporteuse assurant leur évacuation.

Selon un autre exemple de réalisation préféré du dispositif objet de l'invention, les moyens qui assurent l'évacuation des caisses vides sont constitués par deux tapis sans fin latéraux, à arbre d'entraînement vertical, entre lesquels passent les caisses vides, les surfaces de ces tapis sans fin étant garnies de doigts souples venant en prise avec les surfaces latérales des caisses.

D'autres caractéristiques et avantages de la présente invention ressortiront de la description faite ci-après en référence aux dessins annexés qui en illustrent des exemples de réalisation dépourvus de tout caractère limitatif. Sur les dessins :
- la figure 1 est une vue schématique en élévation latérale de la machine selon l'état antérieur de la technique décrite ci-dessus ;
- la figure 2 est une vue schématique similaire à la figure 1 représentant en élévation latérale un dispositif selon la présente invention ;
- la figure 3 est une vue partielle de détail représentant en coupe verticale le tambour et sa bande transporteuse munie d'alvéoles ;
- les figures 4 et 5 sont des vues schématiques en plan représentant respectivement la surface du tambour sans sa bande transporteuse munie d'alvéoles et avec cette bande transporteuse et ;
- la figure 6 est une vue de détail et en plan représentant un exemple de réalisation des moyens qui selon l'invention assurent le maintien des caisses vides.

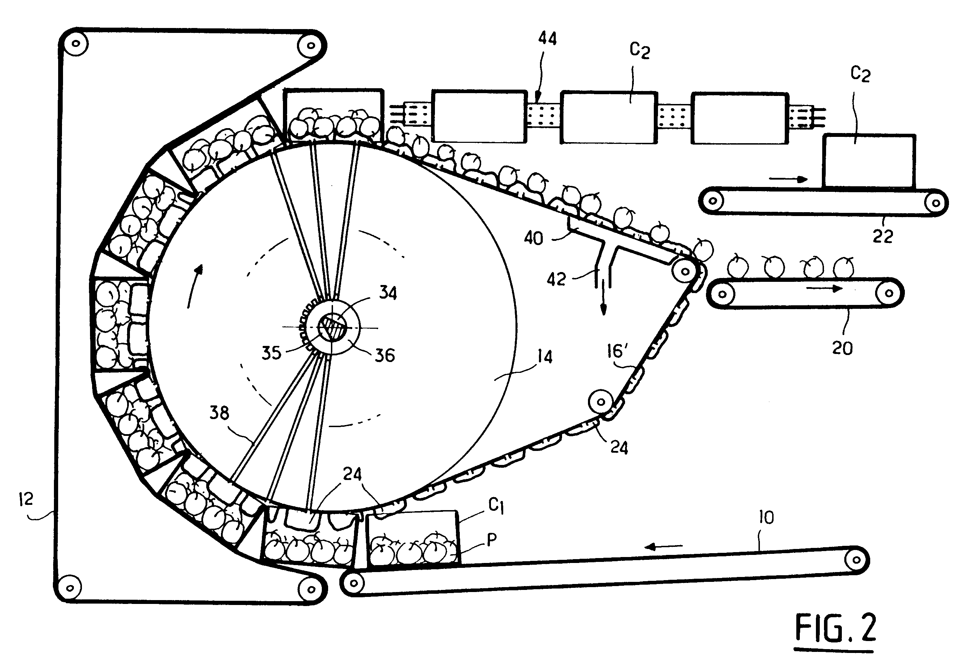

En se référant aux dessins et notamment à la figure 2, on voit que dans son ensemble le dispositif objet de l'invention comporte les éléments fondamentaux de la machine connue décrite ci-dessus en référence à la figure 1. Pour cette raison ces éléments fondamentaux ont été désignés par les mêmes références.

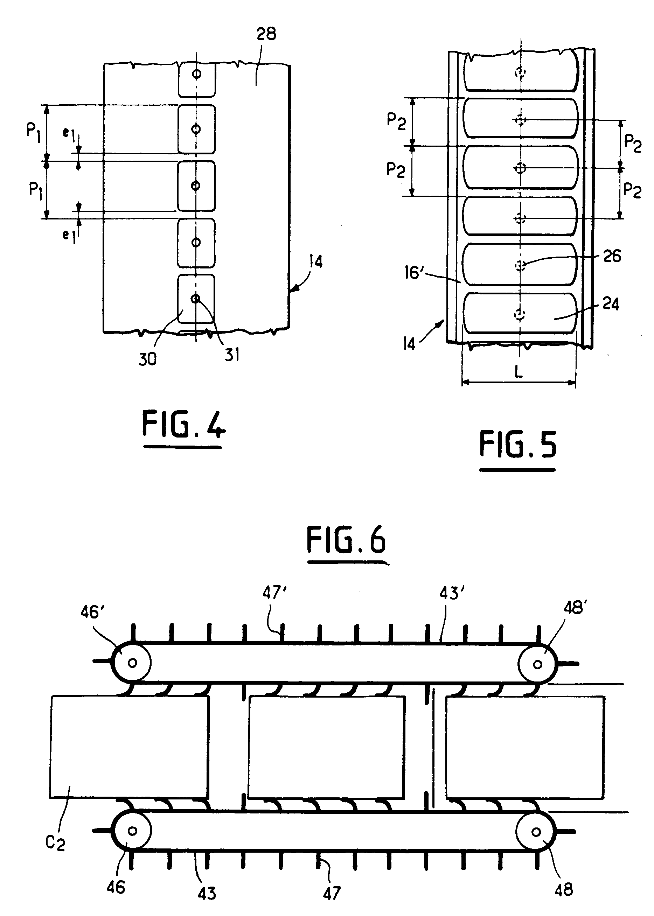

Le dispositif selon l'invention comporte donc une bande transporteuse 10 sur laquelle sont acheminées des caisses C1 contenant les produits P devant être vidés, ces produits étant par exemple des fruits. Le dispositif comporte un tambour rotatif 14 entraîné par l'intermédiaire d'une bande transporteuse 16′, selon le même principe que celui décrit ci-dessus en référence à la figure 1. Ce dispositif comporte par ailleurs un convoyeur de maintien 12 de manière que les caisses pleines C1 soient entraînées entre le tambour 14 (et la bande transporteuse 16′) et le convoyeur de maintien 12.
La bande transporteuse 16′ est pourvue d'une pluralité d'alvéoles gonflables 24 qui sont disposées sur sa surface extérieure ainsi qu'on peut le voir sur les figures 2 et 3. Le dimensionnement et la souplesse de ces alvéoles sont tels que même écrasées par un bord de caisse pleine C1, les alvéoles peuvent se détendre à l'intérieur de la caisse (comme on peut le voir sur la partie gauche de la figure 2) en occupant ainsi l'espace laissé libre entre la surface des fruits P et celle du tambour 14.

La bande transporteuse 16′ comporte une pluralité d'orifices tels que 26, qui sont prévus selon son axe longitudinal et qui débouchent dans chaque alvéole 24 pour assurer son gonflage à partir d'une source d'air comprimé (voir la figure 2). De même, la surface extérieure du tambour est munie d'une pluralité de cavités 31 débouchant respectivement sur chacun des orifices 26 et raccordées par des conduites 32 à une source d'air comprimé, comme on le décrira ci-après. De préférence, on prévoit (figure 3) un revêtement 28 sur la surface extérieure du tambour 14 de manière à assurer l'étanchéité entre ce tambour et la bande 16′. On prévoit des découpes telles que 30 dans le revêtement d'étanchéité 28, au travers desquelles s'effectue l'alimentation en air comprimé des alvéoles telles que 24. Par conséquent, chacune de ces découpes 30 est disposée en regard d'une part d'un orifice 26 débouchant sur l'alvéole 24 et d'autre part d'une cavité 31 sur laquelle est raccordée une conduite 32 d'alimentation en air comprimé.

Comme on peut le voir sur les figures 4 et 5, la distance e1 entre les bords consécutifs des découpes 30 est légèrement inférieure au diamètre de l'orifice de gonflage 26 d'une alvéole dans la bande 16′, de façon à assurer le gonflage de cette dernière même s'il se produit un défaut de synchronisation. Par ailleurs, les pas P2 des alvéoles sont inférieurs aux pas P1 des découpes 30 prévues dans le revêtement d'étanchéité 28 de manière qu'une alvéole ne puisse être alimentée que par une découpe. La différence de pas est telle que une alvéole seulement peut être à cheval entre deux découpes 30. La largeur L de chaque alvéole 24 est choisie en fonction d'une part de la dimension des caisses à vider et d'autre part des produits P que contiennent ces caisses.

L'alimentation de chaque alvéole en air comprimé s'effectue par l'intermédiaire d'un distributeur rotatif 36 qui est entraîné à la même vitesse que le tambour 14 de manière à assurer un gonflage des alvéoles 24 aux moments opportuns, c'est-à-dire lorsque chaque caisse C1 est complètement plaquée contre le tambour 14 (partie de gauche de la figure 2). La distribution en air comprimé s'effectue par l'intermédiaire de l'enceinte 35 et des conduites radiales 38 ménagées dans le tambour 14 et débouchant sur chaque canalisation 32 alimentant chacune des alvéoles 24. L'alimentation en air comprimé est réalisée de manière que les alvéoles 24 se dégonflent lorsque la caisse arrive à la partie supérieure du tambour, le dégonflage ne se produisant pas totalement afin que les alvéoles jouent le rôle d'un tapis ondulé de réception en empêchant les produits tels que les fruits P de rouler sur le brin supérieur de la bande transporteuse 16′. Ce dégonflage s'effectue au travers des conduites 38 et par l'intermédiaire de la chambre de mise à l'air libre 34 du distributeur 36. Sur la figure 2, on voit clairement comment s'effectue le vidage progressif et sans heurt de chacune des caisses, en partie supérieure du tambour 14, les fruits étant reçus par la surface de la bande transporteuse 16′ dont les alvéoles ne sont pas totalement dégonflées.

De préférence, on prévoit à l'extrémité du brin supérieur de la bande 16′ une plaque 40 reliée à une source d'aspiration par l'intermédiaire d'une conduite 42 de manière à aspirer l'air résiduel contenu dans les alvéoles et à libérer les fruits P qui sont délivrés sur un tapis roulant d'évacuation 20. Cette plaque d'aspiration 40 peut être connectée par sa conduite 42 au compresseur qui sert à gonfler les alvéoles.

Dans un tel dispositif il faut également assurer l'évacuation des caisses vides C2, à la partie supérieure du tambour 14 après que les fruits ou autres produits P qu'elles contenaient aient été déversés sur la surface de la bande transporteuse 16′. Ces moyens propres à l'invention, désignés dans leur ensemble par la référence 44 sur la figure 2, sont représentés de façon détaillée sur la figure 6. Comme on le voit, ces moyens comprennent deux tapis latéraux 43, 43′ entre lesquels passent les caisses vides C2. Il s'agit de tapis transporteurs à arbres 46, 48 et 46′, 48′ respectivement d'axes verticaux et qui sont munis de doigts tels que 47, 47′ réalisés en un matériau souple de façon à venir en prise avec les surfaces latérales des caisses vides C2, comme on le voit clairement sur la figure 6. Ces moyens permettent donc d'assurer l'évacuation de caisses vides de largeurs différentes sans qu'il soit nécessaire d'effectuer des réglages.

## Revendications

1. Dispositif pour vider des caisses contenant notamment des produits fragiles tels que des fruits ou des légumes qui comporte un convoyeur d'amenée des caisses pleines (10), un convoyeur (12) de maintien de ces caisses coopérant avec un tambour rotatif (14) pour assurer un retournement sur environ 180° des caisses afin de les vider, ces caisses étant entraînées entre le tambour (14) et ledit convoyeur de maintien (12), une bande transporteuse (16) entraînant le tambour (14) et servant en outre de surface de réception et d'évacuation pour le contenu des caisses vidées et des moyens (27) pour assurer le maintien des caisses vides ainsi que des moyens pour assurer l'évacuation de ces caisses vides, ce dispositif étant caractérisé en ce que la bande transporteuse (16′) entraînant le tambour (14) est munie d'une pluralité d'alvéoles souples et gonflables (24), de manière à pouvoir se dilater, de façon contrôlée, dans chaque caisse pleine (C1) lors de son retournement entre ledit convoyeur de maintien (12) et le tambour en occupant ainsi l'espace laissé libre entre la surface des produits (P) contenus dans la caisse et celle du tambour, des moyens (36, 38) étant prévus pour assurer le gonflage séparé de chaque alvéole lorsqu'elle arrive en regard d'une caisse pleine.

2. Dispositif selon la revendication 1, caractérisé en ce que la bande transporteuse (16′) munie d'alvéoles (24) comporte un orifice de gonflage (26) pour chaque alvéole, cet orifice permettant d'assurer l'alimentation en air comprimé de ladite alvéole.

3. Dispositif selon l'une des revendications précédentes, caractérisé en ce que le tambour (14) est muni d'un revêtement (28) en un matériau assurant l'étanchéité entre la surface du tambour et celle de la bande transporteuse (16′) portant les alvéoles gonflables (24), ce revêtement étant pourvu de découpes (30) qui débouchent respectivement sur les orifices correspondants (26) prévus dans les alvéoles afin d'assurer l'alimentation en air comprimé de ces dernières.

4. Dispositif selon la revendication 3 caractérisé en ce que la distance entre deux découpes (30) est légèrement inférieure au diamètre de l'orifice de gonflage (31) de chaque alvéole (24) dans la bande transporteuse (16′).

5. Dispositif selon l'une des revendications 3 ou 4, caractérisé en ce que le pas des alvéoles (24) sur la surface de la bande (16′) est inférieure au pas des découpes (30) pratiquées dans le revêtement d'étanchéité (28) prévu sur la surface du tambour (14).

6. Dispositif selon l'une quelconque des revendications précédentes, caractérisé en ce que on prévoit un distributeur rotatif (36) au centre du tambour (14) pour assurer l'alimentation en air comprimé des alvéoles (24) par l'intermédiaire de conduites radiales (38) disposées dans le tambour, la vitesse de rotation de ce distributeur étant identique à celle du tambour de manière à gonfler une alvéole lorsque la caisse pleine (C1) est totalement plaquée contre le tambour avant son retournement, à la maintenir gonflée durant toute la rotation du tambour assurant le retournement de la caisse et à dégonfler ladite alvéole lorsque la caisse arrive à la partie supérieure du tambour où se produit le vidage.

7. Dispositif selon la revendication 6, caractérisé en ce que le dégonflage de chaque alvéole (24) n'est pas réalisé de façon totale de manière que ces alvéoles jouent le rôle d'un tapis de réception ondulé empêchant les produits déversés à partir de la caisse en cours de vidage, de tomber brutalement et de rouler sur la bande transporteuse assurant leur évacuation.

8. Dispositif selon l'une quelconque des revendications précédentes caractérisé en ce que on prévoit une plaque d'aspiration (40), disposée à l'extrémité du brin supérieur de la bande transporteuse (16′) recevant les produits (P) déversés à partir des caisses, de manière à aspirer l'air résiduel des alvéoles (24) et à libérer les produits avant de les délivrer à un tapis d'évacuation (20).

9. Dispositif selon l'une quelconque des revendications précédentes, caractérisé en ce que les moyens qui assurent l'évacuation des caisses vides (C2) sont constitués par deux tapis sans fin latéraux (43, 43′), à arbre d'entraînement vertical, entre lesquels passent les caisses vides, les surfaces de ces tapis sans fin étant garnies de doigts souples (47, 47′) venant en prise avec les surfaces latérales des caisses.

## Claims

1. Device for emptying boxes containing, notably, fragile products such as fruits or vegetables, which comprises a feed conveyor for the full boxes (10), a holding conveyor (12) for holding these boxes, cooperating with a revolving drum (14) to ensure that the boxes are turned over through approximately 180° to empty them, these boxes being driven between the drum (14) and said holding conveyor (12), a conveyor belt (16) driving the drum (14) and serving in addition as receiving and removal surface for the contents of the emptied boxes, and means (27) for assuring support of the empty boxes and also means for assuring the removal of these empty boxes, this device being characterized in that the conveyor belt (16') driving the drum (14) is equipped with a plurality of cells (24) that are flexible and inflatable so that they can expand in controlled manner into each full box (C1) during its turning over between said holding conveyor (12) and the drum, by thus occupying the space left free between the surface of the products (P) contained in the box and the surface of the drum, means (36, 38) being provided for assuring separate inflating of each cell when it arrives opposite a full box.

2. Device according to Claim 1, characterized in that the conveyor belt (16') equipped with cells (24) comprises an inflating orifice (26) for each cell, this orifice enabling the supply of compressed air to said cell to be ensured.

3. Device according to one of the preceding Claims, characterized in that the drum (14) is provided with a covering (28) of a material assuring sealing between the surface of the drum and that of the conveyor belt (16') carrying the inflatable cells (24), this covering being provided with cut-outs (30) which lead respectively to the corresponding orifices (26) provided in the cells in order to assure the supply of compressed air to these cells.

4. Device according to Claim 3, characterized in that the distance between two cut-outs (30) is slightly less than the diameter of the inflating orifice (31) of each cell (24) in the conveyor belt (16').

5. Device according to one of Claims 3 or 4, characterized in that the pitch of the cells (24) on the surface of the belt (16') is less than the pitch of the cut-outs (30) formed in the sealing covering (28) provided on the surface of the drum (14).

6. Device according to any one of the preceding Claims, characterized in that a rotary distributor (36) is provided at the centre of the drum (14) for assuring the supply of compressed air to the cells (24) by means of radial pipes (38) disposed in the drum, the speed of rotation of this distributor being identical to that of the drum, so as to inflate a cell when the full box (C1) is entirely placed against the drum before it is turned over, to keep it inflated throughout the rotation of the drum assuring the turning over of the box and to deflate said cell when the box arrives at the upper part of the drum, where emptying takes place.

7. Device according to Claim 6, characterized in that the deflation of each cell (24) is not fully completed, so that these cells fufil the function of an undulating receiving carpet, preventing the products tipped out of the box during emptying from falling abruptly and rolling along the conveyor belt which is removing them.

8. Device according to any one of the preceding Claims, characterized in that a suction plate (40) is provided, disposed at the end of the upper side of the conveyor belt (16') receiving the products (P) emptied from the boxes, so as to suck the remaining air out of the cells (24) and to release the products before delivering them onto a discharge belt (20).

9. Device according to any one of the preceding Claims, characterized in that the means that assure removal of the empty boxes (C2) are constituted of two lateral endless belts (43, 43'), having vertical drive shafts, between which the empty boxes pass, the surfaces of these endless belts being provided with flexible fingers (47, 47'), coming into engagement with the lateral surfaces of the boxes.

## Patentansprüche

1. Vorrichtung zum Entleeren von insbesondere zerbrechliche Produkte wie Früchte oder Gemüse enthaltenden Kästen, welche aufweist: einen Förderer zur Zuführung der vollen Kästen (10), einen Förderer (12), der die Kästen hält und mit einer Drehtrommel (14) zusammenwirkt, um das Umdrehen der Kästen um etwa 180 Grad zu deren Leerung sicherzustellen, wobei die Kästen zwischen der Trommel (14) und dem haltenden Förderer (12) geführt werden, ein Transportband (16), das die Trommel (14) antreibt und darüber hinaus als Aufnahmefläche und Entleerungsfläche für den Inhalt der entleerten Kästen dient und Hilfsmittel (22), um die Halterung der leeren Kästen sicherzustellen sowie Hilfsmittel, um den Abtransport der leeren Kästen sicherzustellen, wobei die Vorrichtung **dadurch gekennzeichnet** ist, daß das die Trommel (14) antreibende Transportband (16') mit einer Vielzahl von flexiblen und aufblasbaren Zellen (24) versehen ist, so daß sich diese in jedem vollen Kasten (C1) bei dessen Umdrehen zwischen dem haltenden Förderer (12) und der Trommel kontrolliert ausdehnen können, wobei sie so den freigelassenen Raum zwischen der Oberfläche der in dem Kasten enthaltenen Produkte (P) und der Trommel einnehmen, und wobei Hilfsmittel (36, 38) vorgesehen sind, um das getrennte Aufblasen jeder Zelle sicherzustellen, wenn diese einem vollen Kasten gegenüberliegt.

2. Vorrichtung nach Anspruch 1, **dadurch gekennzeichnet**, daß mit den Zellen (24) versehene Transportband (16') eine Aufblasöffnung (26) für jede Zelle umfaßt, wobei diese Öffnung die Zuführung von Druckluft in die Zelle gewährleistet.

3. Vorrichtung nach einem der vorhergehenden Ansprüche, **dadurch gekennzeichnet**, daß die Trommel (14) mit einer Auskleidung aus einem Material versehen ist, das die Dichtigkeit zwischen der Trommeloberfläche und der Oberfläche des Transportbandes (16'), das die aufblasbaren Zellen (24) trägt, sicherstellt, wobei die Auskleidung mit Einschnitten (30) versehen ist, die jeweils in die entsprechenden in den Zellen vorgesehenen Öffnungen (26) einmünden, um die Zuführung von Druckluft in diese sicherzustellen.

4. Vorrichtung nach Anspruch 3, **dadurch gekennzeichnet**, daß der Abstand zwischen zwei Einschnitten (30) etwas kleiner ist als der Durchmesser der Aufblasöffnung (31) jeder Zelle (24) in dem Transportband (16').

5. Vorrichtung nach Anspruch 3 oder 4, **dadurch gekennzeichnet**, daß der Abstand der Zellen (24) auf der Oberfläche des Bandes (16') kleiner ist als der Abstand der Einschnitte (30), die in der auf der Oberfläche der Trommel (14) vorgesehenen Dichtigkeitsauskleidung (28) ausgeführt wurden.

6. Vorrichtung nach einem der vorhergehenden Ansprüche, **dadurch gekennzeichnet**, daß ein Drehverteiler (36) im Zentrum der Trommel (14) vorgesehen ist, um die Zuführung von Druckluft zu den Zellen (24) mit Hilfe von Radialleitungen (38) sicherzustellen, die in der Trommel angeordnet sind, wobei die Rotationsgeschwindigkeit des Verteilers gleich der der Trommel ist, so daß eine Zelle aufgeblasen wird, wenn der volle Kasten (C1) vor dem Umdrehen vollständig gegen die Trommel gedrückt wird, wodurch diese während der gesamten Umdrehung der Trommel aufgeblasen bleibt, so daß das Umdrehen des Kastens sichergestellt wird und die Zelle entleert bzw. abgelassen wird, wenn der Kasten den oberen Teil der Trommel erreicht oder die Leerung erfolgt.

7. Vorrichtung nach Anspruch 6, **dadurch gekennzeichnet**, daß das Entleeren bzw. Ablassen jeder Zelle (24) nicht vollständig erfolgt, so daß die Zellen als gewellte Aufnahmematte dienen, die verhindert, daß die aus dem Kasten während der Leerung ausgeschütteten Produkte hart herunterfallen und auf das Transportband rollen, wodurch deren Entleerung sichergestellt wird.

8. Vorrichtung nach einem der vorhergehenden Ansprüche, **dadurch gekennzeichnet**, daß eine am äußersten Ende des Oberbandes des Transportbandes (16') angeordnete Saugplatte (40) vorgesehen ist, die die aus den Kästen geschütteten Produkte (P) so aufnimmt, daß die übrige Luft aus den Zellen (24) abgesaugt wird und die Produkte vor ihrer Aufgabe auf eine Abführungsmatte (20) freigesetzt werden.

9. Vorrichtung nach einem der vorstehenden Ansprüche, **dadurch gekennzeichnet**, daß die Hilfsmittel, die den Abtransport der leeren Kästen (C2) sicherstellen, aus zwei Matten ohne Seitenenden (43, 43') mit vertikaler Führungswelle bestehen, zwischen denen die leeren Kästen verlaufen, wobei die Flächen der endenlosen Matten mit flexiblen Fingern (47, 47') versehen sind, die mit den Seitenflächen der Kästen in Eingriff kommen.
